# EUROPÄISCHE PATENTSCHRIFT

(11) **EP 1 033 060 B1**
(45) Veröffentlichungstag und Bekanntmachung des Hinweises auf die Patenterteilung: **13.10.2004**
(21) Anmeldenummer: 98965084.1
(22) Anmeldetag: 19.11.1998
(51) Int. Cl.: H04Q 11/04

(54) **ATM-VERMITTLUNGSEINRICHTUNG FÜR HOHE DATENGESCHWINDIGKEITEN**
ATM SWITCHING DEVICE FOR HIGH DATA SPEEDS
DISPOSITIF DE COMMUTATION MTA DESTINE A DE GRANDES VITESSES DE TRANSMISSION DE DONNEES

(30) Priorität: 20.11.1997 DE 19751559
(43) Veröffentlichungstag der Anmeldung: 06.09.2000
(73) Patentinhaber: SIEMENS AKTIENGESELLSCHAFT, 80333 München (DE)
(72) Erfinder: THOMS, Mike, D-82110 Germering (DE); WAHLER, Josef, D-82024 Taufkirchen (DE)
(86) Internationale Anmeldenummer: PCT/DE1998/003425
(87) Internationale Veröffentlichungsnummer: WO 1999/027748

(56) Entgegenhaltungen:
- EP-A- 0 506 134
- US-A- 5 117 429
- LEMONIER M ET AL: "PLATE-FORME ATM POUR LE MULTUPLEXEUR DE SERVICES DU PROJECT BREHAT" COMMUTATION ET TRANSMISSION, Bd. 16, Nr. 1, 1. Januar 1994, Seiten 13-20, XP000430158
- ROCHA R ET AL: "A DISTRIBUTED MERGER FOR ATM" PROCEEDINGS OF THE INTERNATIONAL CONFERENCE ON INTEGRATED BROADBAND SERVICES AND NETWORKS, LONDON, 15 - 18 OCT., 1990,15. Oktober 1990, Seiten 253-257, XP000410614 INSTITUTION OF ELECTRICAL ENGINEERS
- BUDDE W O ET AL: "AN ASYNCHRONOUS, HIGH-SPEED PACKET SWITCHING COMPONENT" IEEE DESIGN & TEST OF COMPUTERS, Bd. 11, Nr. 2, 21. Juni 1994, Seiten 33-42, XP000464386

## Beschreibung

Durch den zunehmenden Bedarf an einer Übertragung von optischer Informationen in der modernen Kommunikationstechnik, wie z.B. Fest- und Bewegtbilder bei Bildtelefonanwendungen, oder die Darstellung von hochauflösenden Graphiken an modernen Personalcomputern, steigt die Bedeutung von Übertragungsund Vermittlungstechniken für hohe Datenübertragungsraten (größer 100 Mbit/s). Ein bekanntes Datenübertragungsverfahren für hohe Datengeschwindigkeiten ist der Asynchrone Transfer Modus (ATM). Eine Datenübertragung auf Basis des Asynchronen Transfer Modus ermöglicht derzeit eine variable Übertragungsbitrate von bis zu 622 Mbit/s.

Bekannte Vermittlungseinrichtungen, auch solche auf Basis des Asynchronen Transfer Modus, sind üblicherweise modular aufgebaut. Dabei sind in der Regel eine Vielzahl von Baugruppen - die z.B. eine Schnittstelle zum Anschluß von Teilnehmerleitungen oder eine zentrale Steuerung realisieren - auf einer, allen Baugruppen gemeinsamen, zentralen Steckerbaugruppe, einer sogenannten 'Backplane' einsteckbar und über diese miteinander verbunden. Die dadurch erzielte Modularität der Vermittlungseinrichtungen ermöglicht unter anderem eine leichte Anpassung einer Vermittlungseinrichtung an unterschiedliche Konfigurationen, sowie eine vereinfachte Fehleranalyse bei Serciveleistungen.

Insbesondere die Durchschalteeinrichtungen (z.B. Koppelnetze) von Vermittlungssystemen sind dabei auf einer oder mehreren separaten Durchschaltebaugruppen angeordnet, die ebenfalls auf der zentralen Steckerbaugruppe einsteckbar sind.

Aus dem Datenblatt "MOS INTEGRATED CIRCUIT µPD98410", NEC Corporation, 1997, Document No. S12624EJ1V0DS00 (1st edition) ist ein hochintegrierter Durchschaltebaustein bekannt, der eine Adressierung von mehreren teilnehmerbezogenen Schnittstellen über eine hochfrequente ATM-spezifische-Busschnittstelle (UTOPIA: Universal Test & Operations PHY Interface for ATM) erlaubt.

In EP 0 506 134 A1 ist eine ATM-Vermittlungseinrichtung beschrieben, die eine Durchschalteeinheit mit einem Datenbus und einer Multiplexereinrichtung aufweist. Die Multiplexereinrichtung verbindet den Datenbus über Seriell-Parallel-Konverter mit Teilnehmer-Anschlußleitungen für Eingangssignale. Der Datenbus ist über Adreß-Controller-gesteuerte Speichereinrichtungen und über Parallel-Seriell-Konverter mit Teilnehmer-Anschlußleitungen für Ausgangssignale verbunden.

Der vorliegenden Erfindung liegt die Aufgabe zugrunde, eine modular aufgebaute ATM-Vermittlungseinrichtung, bei der eine Mehrzahl von Teilnehmer-Anschlußeinrichtungen anschließbar sind so auszugestalten, daß ein für ATM-Anwendungen konzipierter hochintegrierter Durchschaltebaustein einsetzbar ist.

Die Lösung dieser Aufgabe erfolgt erfindungsgemäß mit den Merkmalen des Patentanspruchs 1.

Zum besseren Verständnis der Funktionen und der Wirkungsweise einer ATM-Vermittlungseinrichtung erscheint es erforderlich, noch einmal auf bekannte Prinzipien näher einzugehen.

Bei dem als Asynchronen Transfer Modus (ATM) bekannten Übertragungsverfahren werden für den Datentransport Datenpakete fester Länge, sogenannte Zellen benutzt. Eine ATM-Zelle setzt sich aus einem, die für den Transport einer ATM-Zelle relevanten Vermittlungs-Daten enthaltenden, fünf Bytes langem Zellkopf, dem sogenannten 'header' und einem 48 Bytes langem Nutzdatenfeld, dem sogenannten 'payload' zusammen.

In der gemäß dem Asynchronen Transfer Modus konzipierten Vermittlungstechnik werden bei einem Verbindungsaufbau vor Beginn der Nutzdatenübertragung in einem ATM-Kommunikationsnetz durch Austausch von Signalisierungsinformationen Verbindungstabellen mit aus einer Virtuellen-Kanal-Identifizierung - im weiteren mit VCI bezeichnet - und aus einer Virtuellen-Pfad-Identifizierung - im weiteren mit VPI bezeichnet - bestehenden Vermittlungs- bzw. Routing-Information in der jeweiligen ATM-Vermittlungseinrichtung eingerichtet. In den Verbindungstabellen ist der Virtuellen-Kanal-Identifizierung ein VCI-Wert und der Virtuellen-Pfad-Identifizierung ein VPI-Wert zugewiesenBeschreibung tabellen ist der Virtuellen-Kanal-Identifizierung ein VCI-Wert und der Virtuellen-Pfad-Identifizierung ein VPI-Wert zugewiesen. Durch die in die Verbindungstabellen eingetragenen Vermittlungsdaten bzw. Routing-Informationen ist festgelegt, wie die virtuellen Pfade bzw. in den virtuellen Pfaden enthaltene virtuelle Übertragungskanäle der an der ATM-Vermittlungseinrichtung ein- und ausgehenden Verbindungen durch die Signalisierung einander zugeordnet sind, d.h. welcher Eingang mit welchem Ausgang vermittlungstechnisch verknüpft ist. Über diese virtuellen Verbindungen übermittelte ATM-Zellen weisen im Zellkopf im wesentlichen aus einem VPI- und einen VCI-Wert bestehende Vermittlungs-Daten auf. Am Eingang einer ATM-Vermittlungseinrichtung werden die ATM-Zellkopf-Daten bearbeitet, d.h. die darin angeordneten Vermittlungs-Daten erfaßt und bewertet. Anschließend werden die ATM-Zellen anhand den in der Verbindungstabelle gespeicherten Routing-Informationen durch eine in der ATM-Vermittlungseinrichtung angeordnete Durchschalteeinrichtung zu einem, ein bestimmtes Ziel repräsentierenden Ausgang vermittelt.

Bei einer Anordnung der Durchschalteeinrichtung auf einer separaten Durchschaltebaugruppe würde aus konstruktiven Gründen ein, einen hochintegrierten Durchschaltebaustein mit Teilnehmer-Anschlußeinrichtuengen verbindender, hochfrequenter Datenbus (Taktrate > 50 MHz) des hochintegrierten Durchschaltebausteins - selbst bei kleineren Vermittlungseinrichtungen - eine Länge von ca. 30 bis 40 cm aufweisen, die aus leitungstheoretischen Gründen für die gewünschte Taktrate zu groß ist. Erschwerend tritt hinzu, daß eine Kontaktierung von mehreren Teilnehmer-Anschlußeinrichtungen mit dem hochfrequenten Datenbus zur Aufrechterhaltung der leitungstheoretischen Verhältnisse eine zusätzliche Verringerung der Buslänge erfordert.

Die erfindungsgemäße Anordnung bietet nun den Vorteil, daß bei einer Anordnung des hochintegrierten Durchschaltebausteins auf einer Basisbaugruppe und durch ein Zwischenschalten von Multiplexereinrichtungen zwischen dem hochintegrierten Durchschaltebaustein und den Teilnehmer-Anschlußeinrichtungen die Länge des hochfrequenten Datenbusses - der den hochintegrierten Durchschaltebaustein mit den Multiplexereinrichtungen verbindet - sehr gering gehalten werden kann.

Durch das Zwischenschalten der Multiplexereinrichtungen wird zudem eine zeitliche Entkopplung des hochfrequenten Datenbusses von den teilnehmer-anschlußeinrichtungsindividuellen Datenbussen realisiert, so daß jeder einzelne teilnehmer-anschlußeinrichtungsindividuelle Datenbus mit einer niedrigeren, gegebenenfalls durch die Teilnehmer-Anschlußeinrichtung individuell vorgebbare Taktrate betrieben werden kann. Außerdem entsteht zwischen einer Multiplexereinrichtung und einer Teilnehmer-Anschlußeinrichtung eine reine Punkt-zu-Punkt-Verbindung, d.h. nur zwei Anschlüsse je Verbindungsleitung. Die damit erziehlten günstigeren Leitungseigenschaften ermöglichen eine gegenüber dem hochfrequenten Datenbus großzügiger bemessene Länge des teilnehmer-anschlußeinrichtungsindividuellen Datenbusses.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen:
- Fig 1:: ein Strukturbild zur schematischen Darstellung derwesentlichen Funktionseinheiten eines nach dem Asynchronen Transfer Modus konzipierten Durchschaltebausteins;
- Fig 2:: ein Strukturbild zur schematischen Darstellung der auf einer Basisbaugruppe einer erfindungsgemäßen Vermittlungseinrichtung angeordneten wesentlichen Funktionseinheiten.

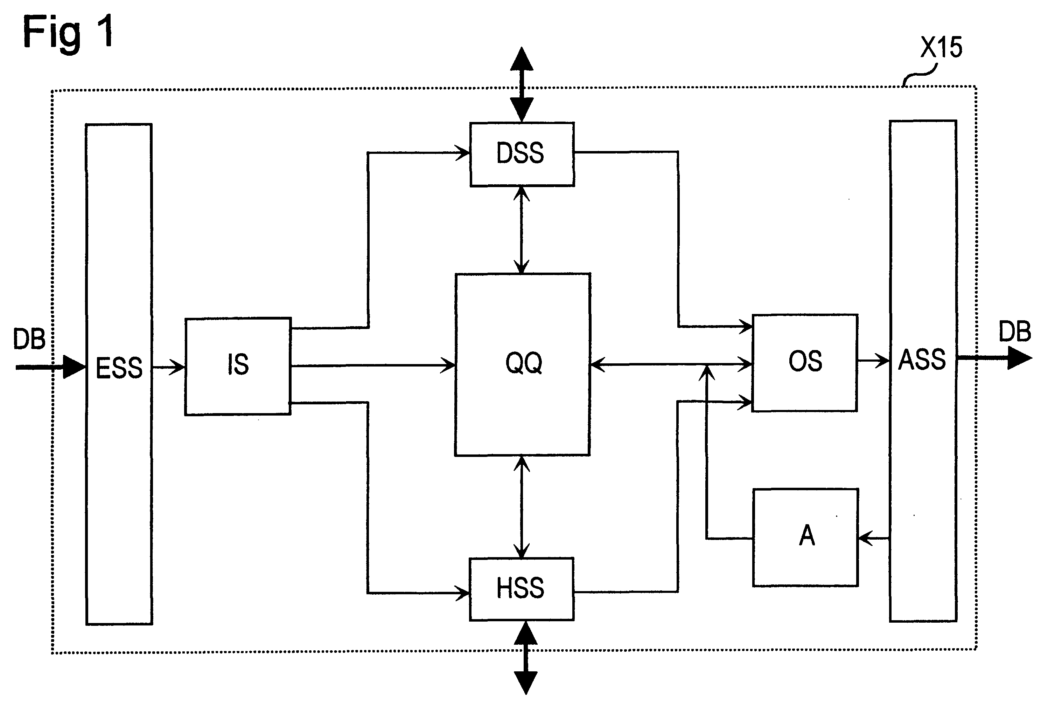

Fig 1 zeigt eine schematische Darstellung der wesentlichen Funktionseinheiten eines hochintegrierten Durchschaltebausteins X15. Der Durchschaltebaustein X15 ist über eine Eingangsschnittstelle ESS und eine Ausgangsschnittstelle ASS mit einem hochfrequenten Datenbus DB verbunden. Zusätzlich ist der Durchschaltebaustein X15 über eine erste Schnittstelle DSS mit einem - in der Zeichnung nicht dargestellten - ersten Speicher und über eine zweite Schnittstelle HSS mit einem - in der Zeichnung nicht dargestellten - zweiten, Vermittlungsdaten bzw. Routing-Informationen enthaltenden Speicher verbunden.

Eintreffende ATM-Zellen werden über die Eingangsschnittstelle ESS zu einem 'Input separator' IS weitergeleitet, der den Zellkopf und das Nutzdatenfeld der eingetroffenen ATM-Zelle voneinander trennt. Die Daten des Nutzdatenfeldes werden über die erste Schnittstelle DSS an den ersten Speicher weitergeleitet und dort zwischengespeichert. Die im Zellkopf der ATM-Zelle befindlichen Vermittlungs-Daten werden teilweise an eine Kontrolleinheit QQ, der in den Vermittlungs-Daten enthaltene VCI-Wert und der VPI-Wert werden über die zweite Schnittstelle HSS zum zweiten Speicher weitergeleitet. Anhand der im zweiten Speicher in Form von Vermittlungstabellen hinterlegten Routing-Informationen werden der VCI-Wert und der VPI-Wert für eine Weitervermittlung der ATM-Zelle umbewertet.

Signalisiert eine Arbitrierungseinheit A des Durchschaltebausteins X15 der Kontrolleinheit QQ, daß eine über den Datenbus DB angeschlossene - in der Zeichnung nicht dargestellte - Teilnehmer-Anschlußeinrichtung Daten anfordert, überprüft die Kontrolleinheit QQ, ob dieser Teilnehmer-Anschlußeinrichtung zugeordnete ATM-Zellen zwischengespeichert sind. Ist dies der Fall, werden in einem 'Output selector' OS der zuvor abgetrennte Zellkopf, mit dem umbewerteten VCI-Wert und dem umbewerteten VPI-Wert und das zugeordnete Nutzdatenfeld zusammengefügt und über die Ausgangsschnittstelle ASS auf den Datenbus DB geschrieben.

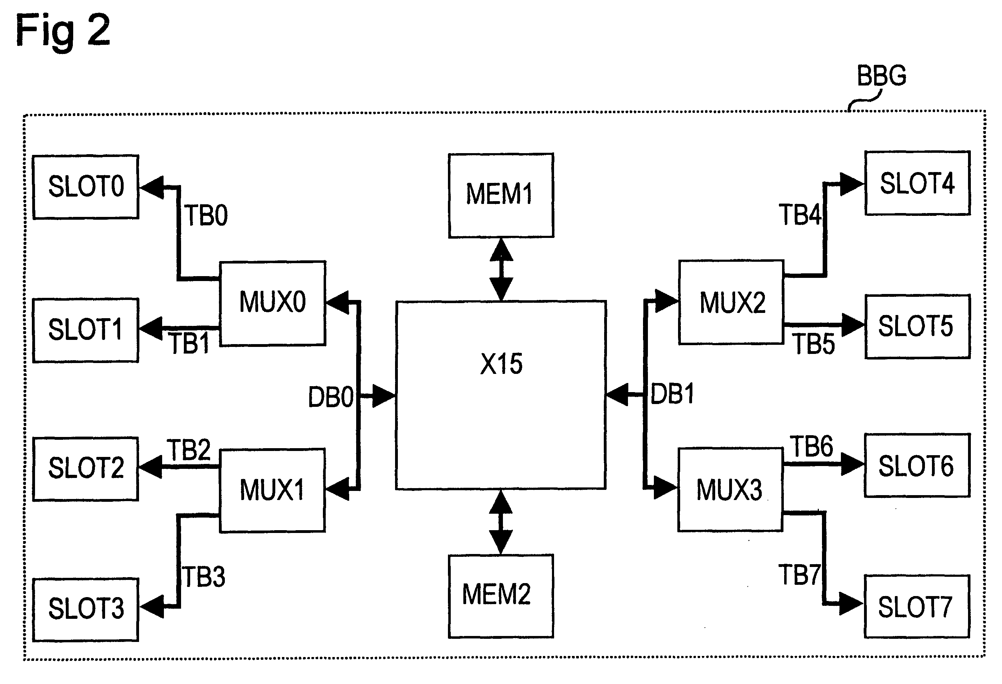

Fig 2 zeigt eine schematische Darstellung der auf einer Basisbaugruppe BBG einer erfindungsgemäßen Vermittlungseinrichtung angeordneten wesentlichen Funktionseinheiten. Die Basisbaugruppe BBG weist einen hochintegrierten Durchschaltebaustein X15 auf, der über jeweils einen Speicherdatenbus mit einem ersten Speicher MEM1 und einem zweiten Speicher MEM2 verbunden ist. Der erste Speicher MEM1 dient einer Zwischenspeicherung von in einer ATM-Zelle gespeicherten Nutzinformationen. Im zweiten Speicher MEM2 sind in Form von Vermittlungstabellen Routing-Informationen für die zu vermittelnden ATM-Zellen abgespeichert. Für eine Verbindung mit - in der Zeichnung nicht dargestellten - Teilnehmer-Anschlußeinrichtungen besitzt der Durchschaltebaustein X15 einen ersten und einem zweiten hochfrequenten (Taktrate: 50 Mhz) Datenbus DB0, DB1 mit 16-bit-Breite.

Die Basisbaugruppe BBG weist acht Anschlußsteckplätze SLOT0, ...,SLOT7 für eine Kontaktierung mit Teilnehmer-Anschlußeinheiten, sowie vier, in einem näheren Bereich des Durchschaltebausten X15 angeordnete Multiplexereinrichtungen MUX0,..., MUX3 auf. Eine erste und eine zweite Multiplexereinrichtung MUX0, MUX1 sind über den ersten hochfrequenten Datenbus DB0 und eine dritte und eine vierte Multiplexereinrichtung MUX2, MUX3 sind über den zweiten hochfrequenten Datenbus DB1 mit dem Durchschaltebaustein X15 verbunden. Durch die Anordnung der Multiplexereinrichtungen MUX0,...,MUX3 in einem näheren Bereich des Durchschaltebausten X15 wird die Länge des ersten und des zweiten hochfrequenten Datenbusses DB0, DB1 minimiert.

Für einen Anschluß von Teilnehmer-Anschlußeinrichtungen an den Durchschaltebaustein X15 ist ein erster Anschlußsteckplatz SLOT0 über einen ersten teilnehmer-anschlußeinrichtungsindividuellen Datenbus TB0 und ein zweiter Anschlußsteckplatz SLOT1 über einen zweiten teilnehmer-anschlußeinrichtungsindividuellen Datenbus TB1 mit der ersten Multiplexereinrichtung MUX0 verbunden. In analoger Weise ist der dritte bis achte Anschlußsteckplatz SLOT2,...,SLOT7 an die zweite bis vierte Multiplexereinrichtung MUX1,...,MUX3 angeschlossen. Da für ATM-spezifische Bausteine bisher nur 8-bit breite Bausteine bekannt sind, setzt sich ein teilnehmer-anschlußeinrichtungsindividueller Datenbus TB0,...,TB7 aus zwei separaten Datenbussen mit 8-bit-Breite zusammen.

Durch die Verbindung einer Teilnehmer-Anschlußeinrichtung mit einer Multiplexereinrichung MUX0,...,MUX3 über einen separaten teilnehmer-anschlußeinrichtungsindividuellen Datenbus TB0,...,TB7 entsteht eine definierte Punkt-zu-Punkt-Verbindung zwischen dieser Teilnehmer-Anschlußeinrichtung und der zugeordneten Multiplexereinrichung MUX0,...,MUX3. Die damit verbundenen günstigen Leitungseigenschaften ermöglichen eine Datenübertragung über eine längere Übertragungsstrecke.

Aufgrund einer durch die Multiplexereinrichtungen MUX0,..., MUX3 realisierte zeitliche Entkopplung der teilnehmer-anschlußeinrichtungsindividuellen Datenbusse TB0,..., TB7 vom ersten und zweiten hochfrequenten Datenbus DB0, DB1 kann jeder teilnehmer-anschlußeinrichtungsindividuelle Datenbus TB0,...,TB7 mit einer separaten, durch die jeweilige Teilnehmer-Anschlußeinrichtung vorgegebenen, niedrigeren Taktrate betrieben werden.

## Patentansprüche

1. ATM-Vermittlungseinrichtung für hohe Datengeschwindigkeiten,
mit einer Durchschalteeinheit, die einen auf einer Basisbaugruppe (BBG) angeordneten zentralen integrierten Durchschaltebaustein (X15) und mindestens einen hochfrequenten Datenbus (DB0, DB1) aufweist,
wobei auf der Basisbaugruppe (BBG) mehrere Anschlußplätze (SLOT0,...,SLOT7) für eine Kontaktierung von Teilnehmer-Anschlußeinrichtungen vorgesehen sind und
wobei auf der Basisbaugruppe (BBG) mehrere Multiplexereinrichtungen (MUX0,...,MUX3) angeordnet sind, die einerseits mit dem zentralen integrierten Durchschaltebaustein (X15) über einen hochfrequenten Datenbus (DB0, DB1) und andererseits mit jeweils mindestens einer Teilnehmer-Anschlußeinrichtung über einen teilnehmer-anschlußeinrichtungsindividuellen Datenbus (TB0,...,TB7) verbunden sind.

2. ATM-Vermittlungseinrichtung nach Anspruch 1,
**dadurch gekennzeichnet,**
**daß** die Multiplexereinrichtungen (MUX0,...,MUX3) in einem näheren Bereich des Durchschaltebausteins (X15) auf der Basisbaugruppe (BBG) angeordnet sind.

3. ATM-Vermittlungseinrichtung nach einem der vorhergehenden Ansprüche,
**dadurch gekennzeichnet,**
**daß** eine Kontaktierung von den Teilnehmer-Anschlußeinrichtungen mit den Anschlußplätzen (SLOT0,...,SLOT7) über eine Steckverbindung erfolgt.

4. ATM-Vermittlungseinrichtung nach einem der vorhergehenden Ansprüche,
**dadurch gekennzeichnet,**
**daß** als hochfrequenter Datenbus (DB0,DB1) ein 16-bit breiter Datenbus vorgesehen ist,
und **daß** sich der teilnehmer-anschlußeinrichtungsindividuelle Datenbus (TB0,...,TB7) aus zwei separaten 8-bit breiten Datenbussen zusammensetzt.

## Claims

1. ATM switching device for high data rates,
comprising a circuit switching unit which has a central integrated circuit switching chip (X15), arranged on a base assembly (BBG), and at least one radio-frequency data bus (DB0, DB1),
wherein a number of connection slots (SLOT0,...,SLOT7) for making contact with subscriber line devices are provided on the base assembly (BBG), and
wherein a number of multiplexer devices (MUX0,...,MUX3) are arranged on the base assembly (BBG) and are connected, on the one hand, to the central integrated circuit switching chip (X15) via a radio-frequency data bus (DB0, DB1) and, on the other hand, are connected to in each case at least one subscriber line device via a subscriber-line-device-specific data bus (TB0,...,TB7).

2. ATM switching device according to Claim 1, **characterized in that** the multiplexer devices (MUX0,...,MUX3) are arranged close to the circuit switching chip (X15) on the base assembly (BBG).

3. ATM switching device according to one of the preceding claims, **characterized in that** the subscriber line devices make contact with the connection slots (SLOT0,...,SLOT7) via a plug-in connection.

4. ATM switching device according to one of the preceding claims,
**characterized in that** a 16-bit-wide data bus is provided as the radio-frequency data bus (DB0, DB1),
and **in that** the subscriber-line-device-specific data bus (TB0,...,TB7) is composed of two separate 8-bit-wide data buses.

## Revendications

1. Dispositif de commutation à mode de transfert asynchrone MTA (ou, en anglais, Asynchronous Transfer Modus ATM) pour vitesses de transmission de données élevées
comportant une unité d'interconnexion ayant un composant central d'interconnexion (X15) intégré disposé sur un module de base (BBG) et, au moins, un bus de données à haute fréquence (DB0, DB1),
plusieurs emplacements de raccordement par enfichage (SLOT0, ..., SLOT7) étant prévus sur un module de base (BBG) pour le raccordement de dispositifs de raccordement d'abonnés et
plusieurs dispositifs de multiplexage (MUX0, ..., MUX3) étant disposés sur le module de base (BBG), où ils sont, d'une part, reliés au composant central intégré d'interconnexion (X15), par l'intermédiaire d'un bus de données à haute fréquence (DB0, DB1) et, d'autre part, chacun à, au moins, un dispositif de raccordement d'abonné, par l'intermédiaire d'un bus de données (TB0, ..., TB7) individuel au dispositif de raccordement d'abonné.

2. Dispositif de commutation à mode de transfert asynchrone MTA selon la revendication 1
**caractérisé par le fait**
**que** les dispositifs de multiplexage (MUX0, ..., MUX3) sont disposés dans une zone proche du composant d'interconnexion (X15) sur le module de base (BBG).

3. Dispositif de commutation à mode de transfert asynchrone MTA selon l'une des revendications précédentes
**caractérisé par le fait**
**que** le raccordement des dispositifs de raccordement d'abonné avec les emplacements de raccordement (SLOT0, ..., SLOT7) se fait par enfichage.

4. Dispositif de commutation à mode de transfert asynchrone MTA selon l'une des revendications précédentes
**caractérisé par le fait**
**qu'**il est prévu, en tant que bus de données à haute fréquence (DB0, DB1), un bus de données ayant une largeur de 16 bits
et **que** le bus de données (TB0, ..., TB7) individuel au dispositif de raccordement d'abonné se compose de deux bus de données séparés d'une largeur de 8 bits.
